## Europäisches Patentamt
## European Patent Office
## Office européen des brevets

(19)

(11) Publication number: **0 005 929**
**B1**

(12) **EUROPEAN PATENT SPECIFICATION**

(45) Date of publication of patent specification: **01.12.82**

(51) Int. Cl.³: **C 08 F 12/02, C 08 J 9/22, C 08 K 5/10**

(21) Application number: **79300828.5**

(22) Date of filing: **15.05.79**

(54) **Foamable resin particles and their use in the production of a foamed product.**

(30) Priority: **30.05.78 GB 2391378**

(43) Date of publication of application:
**12.12.79 Bulletin 79/25**

(45) Publication of the grant of the patent:
**01.12.82 Bulletin 82/48**

(84) Designated Contracting States:
**DE FR GB IT NL**

(56) References cited:
**FR - A - 1 596 741**
**GB - A - 1 093 899**
**GB - A - 1 146 342**
**GB - A - 1 153 899**
**GB - A - 1 289 466**

(73) Proprietor: **Monsanto Europe S.A.**
**Avenue de Tervuren 270-272**
**B-1150 Brussels (BE)**

(72) Inventor: **Mitchell, Robert William**
**Avenue Chevalier Jehan, 60**
**B-1300 Wavre (BE)**
Inventor: **Chaix, Claude**
**Avenue des Combattants, 231**
**B-1490 Court-Saint-Etienne (BE)**

(74) Representative: **Pearson, John Lionel et al,**
**Monsanto House 10-18 Victoria Street**
**London, SW1H ONQ (GB)**

Courier Press, Leamington Spa, England.

Foamable resin particles and their use in the production of a foamed product

This invention relates to foamable resins, particularly foamable vinylaromatic polymers, and it also includes a process for producing foamed products from the foamable resins.

A foamed vinylaromatic polymer such as for instance foamed polystyrene is an important industrial commodity, particularly in the form of blocks that can be cut into boards and other shapes. Foamed polystyrene blocks and other articles are commonly produced by a process in which foamable particles consisting essentially of polystyrene and a volatile blowing agent are expanded by the action of heat, so as to produce a "prefoam" of foamed beads and these foamed beads are placed in a suitable mould and heated by steam in a moulding operation where expansion and fusion of the beads takes place and an article conforming to the shape of the mould is produced. This process works well in principle, but is capable of improvement in certain respects; in particular for instance it is advantageous to shorten the time for which an article sometimes needs to be allowed to cool before it can be safely removed from the mould.

It has been proposed to coat foamable polystyrene particles with various substances, but experiments along these lines have not always been successful; in particular there may result a decrease in flexural strength of the final article owing to poor fusion of the foamed particles to one another, or sometimes the foamed particles may stick together before they are moulded, giving rise to blockages in handling apparatus. Sometimes the coating can cause foam collapse, increasing the article's density.

It has been proposed in British Patent No. 1,289,466 to coat the foamable polystyrene particles with a composition comprising a lipophilic surface active agent and a plasticiser and a very large number of possible surface active agents (including long-chain esters of polyhydric alcohols such as sorbitan) and plasticisers are listed therein.

It has now been found that an improvement can be effected in the important respect of cooling time if a specially treated foamable polymer is employed. Further advantages often result. The foamed beads frequently show a reduced disposition to stick together into the clusters that have sometimes tended to cause blockages in handling apparatus yet the individual beads are in general excellently fused together in the final foamed article; this combination of advantages is especially surprising and valuable. In addition articles produced from the beads do not usually suffer from any undesirable increase in density as a result of their treatment in accordance with the present invention.

According to the present invention there are provided foamable resin particles comprising a vinylaromatic polymer and a volatile blowing agent, coated with a composition comprising a lipophilic surface active agent and a plasticiser characterised in that the lipophilic surface active agent is sorbitan mono-oleate, mono-palmitate, mono-laurate or mono-stearate and the plasticiser is a diheptyl, dioctyl or dinonyl phthalate.

A further feature of the invention comprises a process for the production of a foamed vinylaromatic polymer product, which comprises preparing a prefoam of foamed particles by steam-heating foamable resin particles comprising a vinylaromatic polymer and a volatile blowing agent and coated with a composition comprising a sorbitan mono-oleate, monopalmitate, mono-laurate or mono stearate and a diheptyl, dioctyl or dinonyl phthalate, and treating the prefoam with steam in a mould to produce the required foamed product. A block or other product produced by this process is included in the invention.

Preferably the sorbitan ester is present to the extent of 0.005 to 0.5 per cent by weight of the foamable resin particles. Often a convenient quantity is one chosen within the range of 0.01 to 0.2 per cent by weight, for example 0.01 to 0.1 per cent by weight. The preferred sorbitan ester for use in the coating composition is sorbitan mono-oleate.

The dialkyl phthalate used in the composition with which the particles are coated is preferably a dioctyl phthalate and this is normally the di (2-ethylhexyl) phthalate described in the Examples.

The amount of the phthalate applied as coating to the foamable resin particles is often not more than 0.5 per cent by weight of the particles, for instance from 0.001 to 0.2 per cent or preferably from 0.002 to 0.1 per cent by weight. About 0.01 per cent by weight of the particles has given good results. Normally the coating is spread substantially evenly over the surface of the particles, but this is not an essential condition. There can be some uncoated areas or the thickness of the coating may vary over the surface of a given particle.

It is preferred to use the combination of sorbitan mono-oleate and di (2-ethylhexyl) phthalate as the coating composition for the particles.

Particularly valuable products are obtained when the vinyl aromatic polymer is polystyrene itself, but it can be for instance a toughened polystyrene; a polymer of a substituted styrene, such as $\alpha$-methylstyrene; or a copolymer of styrene with a minor proportion (such as 10 per cent or 20 per cent by weight) of an ethylenically unsaturated monomer, for instance an acrylate (such as methyl acrylate), acrylonitrile or butadiene.

The volatile blowing agent is preferably a volatile hydrocarbon blowing agent or some other volatile substance that swells but does not dissolve the vinyl aromatic polymer. A volatile hydrocarbon blowing agent can be gaseous or a liquid under normal conditions of temperature and pressure and can for instance be a butane or pentane. Preferably it is essentially a pentane fraction. Usually up to about 10 per cent of a blowing agent by weight of the polymer is present for instance from 3 to 10 per cent.

The foamable resin particles can be of any shape, but preferably they are roughly spherical, and of average diameter between 0.3 and 5 millimetres, for example from 0.4 to 3 millimetres. Foamable "beads" that have been made by an aqueous suspension polymerisation process are particularly useful.

Coating the resin particles can be effected by any convenient technique, the sorbitan ester and the dialkyl phthalate being added separately or together. Sometimes the resin particles can be coated directly with the appropriate quantity of the ingredients or if the phthalate is a viscous liquid the coating operation is assisted by lowering its viscosity with a small amount of an appropriate organic liquid and coating the particles with the solution or suspension of the ingredients. The organic liquid is one that does not attack the vinylaromatic polymer and can be for instance an alcohol, such as for example methanol, ethanol or isopropanol, or a hydrocarbon, such as for example pentane, hexane, cyclohexane or a mixture of these liquids. Where the blowing agent is a volatile liquid a little of it can be used for this purpose. The coating operation can be carried out by tumbling, mixing, spraying or other conventional means.

Other additives can be incorporated in the coating applied to the foamable resin particles of the invention. These include for example, a metal salt of a long chain fatty acid which can help to reduce any tendency for pre-foam sticking to occur. A metal salt of a saturated long chain fatty acid, such as for example, zinc or calcium stearate, is often especially useful, and is preferably added to the foamable particles before the addition of the phthalate and the sorbitan ester.

The foaming and moulding operations can follow ordinary practice; thus the foamable particles can for example be heated by steam, hot water or hot air, or under the influence of an infra-red heater to produce foamed beads, and these are preferably conditioned by exposing them to the atmosphere for a day or two before they are used in the moulding operation. The foamed particles very often have an improved ability to flow under gravity and so are easily handled during this part of the process. A suitable mould is fully or partially filled with foamed beads and closed, and then steam is injected through inlets in the mould walls. When foaming is complete, the steam supply is shut off and the article is allowed to cool in the mould before the mould is opened. The article, such as a block, is cooled to such an extent that it does not "bulge" or "crack" on opening the mould.

The cooling time of a moulded article made from foamable particles according to the invention is very acceptable. Moreover fusion together of the particles in the moulded product is often excellent and as a result the block or other product is stronger.

The invention is illustrated by the following Examples. All references to "parts" in these Examples relate to "parts by weight".

### Example 1

This Example describes foamable polystyrene particles coated with a composition containing a phthalate and a sorbitan ester. The Example also describes the use of the foamable particles in the production of a foamed polystyrene article.

100 parts by weight of foamable polystyrene particles having an average diameter of about 1.3 millimetres and containing a pentane fraction blowing agent, were tumbled in a conical blender with 0.03 parts of zinc stearate followed by 0.01 parts of di(2-ethylhexyl) phthalate and 0.05 parts of sorbitan monooleate dissolved in 0.14 parts of a 1:2 volume mixture of cyclohexane and industrial methylated spirits. When the polystyrene particles had been coated uniformly, the solvent was evaporated by a stream of nitrogen to leave free-flowing particles.

A sample of these coated particles was then prefoamed in a batch prefoamer to a bulk density of about 16 grams per litre.

No difficulty was experienced due to prefoam sticking.

After conditioning the prefoam under atmospheric conditions for 24 hours it was used to fill a cubic mould measuring 30 cms along each side, having perforated sides, base and lid, and equipped with an air vent in the lid and drainage apertures in its base. Steam was injected through the perforations in the mould walls, the pressure rising to 0.35 kilograms per square cm gauge after 20 seconds, held at this pressure for 10 seconds and then the pressure was raised to 0.56 kilograms per square cm gauge after 20 seconds and held at this pressure for a further 10 seconds. The steam was then stopped and the mould allowed to cool. During the first part of the steaming cycle the drain apertures and vent were controlled automatically.

After 9 minutes the mould could be opened without the block distorting or cracking (the "block cooling time"). The block had a density of about 16 grams per litre and was thus comparable in this respect with the foamed product of the comparative experiment below in which uncoated foamable particles were used. A further 24 hours later strips were cut from the centre of this block using a hot wire. The strips measured $1.27 \times 10^{-2}$ metres ($\frac{1}{2}$ inch) by $25.4 \times 10^{-2}$ metres (10 inches) by $5.08 \times 10^{-2}$ metres (2 inches) and were bent around cylindrical mandrels of decreasing diameter until they broke. Thus the diameter of the mandrel was an indication of the sample's strength and flexibility, the larger the diameter of the mandrel the weaker the sample and the poorer its flexibility.

The broken samples were then examined and the particles that had been broken through and those that remained intact were counted. (In the case of intact particles the break occurred around the interface of the particles.) This gave a measure of the degree of fusion of the foamed particles.

The four strips which were examined only broke respectively over 10, $7\frac{1}{2}$, $7\frac{1}{2}$, and $12\frac{1}{2}$ centimetre mandrels and on average 61 per cent of the foamed particles had been broken through showing that the particles were well fused together.

This comparative experiment shows that when foamable polystyrene particles are not coated with a composition as in the present invention an inferior foamed product is obtained.

Foamable polystyrene particles having an average diameter of about 1.3 millimetres of the same kind as employed in Example 1 above, but uncoated, were prefoamed to a bulk density of about 16 grams per litre and were moulded according to the procedure described in that Example.

The block density was about 16 grams per litre, and the cooling time was found to be 17 minutes which was much inferior in this respect to the foamed product of Example 1.

Example 2

This Example describes foamable polystyrene particles coated with di(2-ethylhexyl) phthalate and sorbitan monooleate, and their use in the production of a foamed polystyrene article.

The same procedure as that of Example 1 was carried out except that 0.05 parts of di(2-ethylhexyl) phthalate were employed and 0.23 parts of the mixture of cyclohexane and industrial methylated spirits.

The block cooling time was found to be $2\frac{1}{2}$ minutes.

This experiment shows that when the process of Example 2 was carried out in the absence of the phthalate an inferior foamed product with a longer cooling time was obtained.

The process of Example 2 was carried out in the absence of the phthalate and in the presence of 0.12 parts of the mixture of cyclohexane and industrial methylated spirits.

The block cooling time was found to be 15 minutes.

This experiment shows than when the process of Example 2 was carried out in the absence of the sorbitan ester an inferior foamed product was obtained.

The process of Example 2 was carried out in the absence of the sorbitan monooleate and in the presence of 0.12 parts of the mixture of cyclohexane and industrial methylated spirits.

The block cooling time was found to be 11 minutes.

Example 3

100 parts by weight of foamable polystyrene particles having an average diameter of about 0.8 millimetres and containing a pentane fraction blowing agent, were tumbled in a conical blender with 0.01 parts of zinc stearate followed by 0.01 parts of di(2-ethylhexyl) phthalate and 0.12 parts of sorbitan monopalmitate dissolved in 0.31 parts of a 1:2 volume mixture of cyclohexane and industrial methylated spirits. When the polystyrene particles had been coated uniformly, the solvent was evaporated by a stream of nitrogen to leave free-flowing particles.

A sample of these coated particles was then prefoamed in a batch prefoamer to a bulk density of about 22 grams per litre. No difficulty was experienced due to prefoam sticking.

After conditioning the prefoam under atmospheric conditions for 24 hours it was used to fill a cubic mould measuring 30 centimetres by 30 centimetres and 5 centimetres deep and having perforated sides, base and lid, and equipped with an air vent in the lid and drainage apertures in its base. Steam was injected through the perforations in the mould walls, the pressure rising to 0.21 kilograms per square centimetre gauge after 10 seconds and then the pressure was raised to 0.85 kilograms per square centimetre gauge for 10 seconds and kept at this pressure for 10 seconds. The steam was then stopped and the mould allowed to cool. During the first part of the steaming cycle the drain apertures and vent were controlled automatically.

The block cooling time was found to be $12\frac{1}{2}$ minutes. The block had a density of about 22 grams per litre and was thus comparable in this respect with the foamed product of the experiment below in which uncoated foamable particles were used.

Example 4

This Example describes foamable polystyrene particles coated with di(2-ethylhexyl) phthalate and sorbitan monopalmitate and their use in the production of a foamed polystyrene article.

The same procedure as that of Example 3 was carried out except that 0.03 parts of di(2-ethylhexyl) phthalate were employed and 0.36 parts of the mixture of cyclohexane and industrial methylated spirits.

The block cooling time was found to be 5 minutes.

This experiment shows that when foamable polystyrene particles are not coated with a composition as in the present invention an inferior foamed product is obtained.

Foamable polystyrene particles having an average diameter of about 0.8 millimetres of the same kind as employed in Example 3, but uncoated, were prefoamed to a bulk density of about 22 grams per litre and were moulded according to the procedure described in that Example.

The block density was about 22 grams per litre, and the cooling time was found to be 20 minutes which was much inferior in this respect to the foamed product of Example 3.

This experiment shows that when the process of Example 4 was carried out in the absence of the phthalate an inferior foamed product with a longer cooling time was obtained.

The process of Example 4 was carried out in the absence of the phthalate and in the presence of 0.29 parts of the mixture of cyclohexane and industrial methylated spirits.

The block cooling time was found to be 15 minutes.

This experiment shows that when the process of Example 4 was carried out in the absence of the sorbitan ester an inferior foamed product was obtained.

The process of Example 4 was carried out in the absence of the sorbitan monopalmitate and in the presence of 0.07 parts of the mixture of cyclohexane and industrial methylated spirits.

The block cooling time was found to be 16 minutes.

For comparative purposes an attempt was made to use the dibutyl phthalate referred to in B.P. 1,289,466 in conjunction with sorbitan monooleate, but it was found that the use of this combination led to the foamed beads sticking together in clusters which caused blockages in the handling apparatus. Furthermore, in view of the small quantity of dibutyl phthalate that it was necessary to employ in order to avoid excessive plasticisation there were serious control problems and very erratic results were secured.

To show the superiority of the coating composition used on the particles of the present invention over the coating compositions used on the particular particles described in the specific Examples of B.P. 1,289,466, the following experiments were carried out by the general technique of Example 1 but using a batch of foamable polystyrene particles with different properties, manufactured in another plate, which when prefoamed in the uncoated form to a bulk density of about 16 grams per litre and then moulded had a block cooling time of 27.5 minutes.

This experiment describes foamable polystyrene particles coated with 0.03 parts of zinc stearate, 0.01 parts of Slack Wax 11/C (a petroleum wax sold by B.P. Chemicals Limited and containing 25% by weight of mineral oil) and 0.025 parts of sorbitan monopalmitate and their use in the production of a foamed polystyrene article.

The same procedure as that of Example 1 was carried out except that the different batch of particles was employed. The block cooling time was found to be 25 minutes.

This experiment describes foamable polystyrene particles coated with 0.03 parts of zinc stearate, 0.01 parts of Primol* 355 (a white mineral oil of the liquid paraffin type manufactured by Esso Limited) and 0.025 parts of sorbitan monopalmitate and their use in the production of a foamed polystyrene article.

The same procedure as that of the preceding experiment was carried out. The block cooling time was found to be 30 minutes.

Example 5

This Example describes foamable polystyrene particles coated with 0.035 parts of zinc stearate, 0.015 parts of di(2-ethylhexyl) phthalate and 0.05 parts of sorbitan monooleate and their use in the production of a foamed polystyrene article.

The same procedure as that of the preceding experiment was carried out.

The block cooling time was found to be 18 minutes.

Accordingly, it is clear from the above experiments that the products of the invention are superior to the products described in the Examples of B.P. 1,289,466.

**Claims**

1. Foamable resin particles comprising a vinyl aromatic polymer and a volatile blowing agent, coated with a composition comprising a lipophilic surface active agent and a plasticiser characterised in that the lipophilic surface active agent is sorbitan monooleate, monopalmitate, monolaurate or monostearate and the plasticiser is a diheptyl, dioctyl or dinonyl phthalate.

2. Foamable resin particles according to Claim 1 in which the composition comprises from 0.001 to 0.2 per cent by weight of the plasticiser based on the weight of the particles.

3. Foamable resin particles according to either of Claims 1 or 2 in which the composition comprises from 0.01 to 0.2 per cent by weight of the lipophilic surface active agent based on the weight of the particles.

4. Foamable resin particles according to any of the preceding claims in which the vinylaromatic polymer is polystyrene.

5. Foamable resin particles according to any of the preceding claims in which the plasticiser is a dioctyl phthalate.

6. Foamable resin particles according to claim 5, in which the plasticiser is di(2-ethylhexyl) phthalate.

7. Foamable resin particles according to any of the preceding claims in which sorbitan mono-

* Registered Trade Mark in the United Kingdom.

oleate, monolaurate or monostearate is the lipophilic surface active agent.

8. Foamable resin particles according to claim 7, in which the lipophilic surface active agent is sorbitan monooleate.

9. Foamable resin particles according to any of the preceding claims, in which the composition comprises di(2-ethylhexyl) phthalate and sorbitan monooleate.

10. Foamable resin particles according to any of the preceding claims which comprise from 3 to 10 per cent by weight of the polymer of a volatile hydrocarbon blowing agent.

11. Foamable resin particles according to Claim 10 in which the volatile hydrocarbon blowing agent comprises pentane.

12. Foamable resin particles according to any of the preceding claims coated with a composition comprising zinc stearate.

13. A process for the production of a foamed product which comprises preparing a prefoam of foamed particles by steam-heating foamable resin particles according to claim 1 and treating the prefoam with steam in a mould to produce the required product.

## Revendications

1. Particules de résine transformables en mousse comprenant un polymère vinylaromatique et un agent porogène volatil, revêtues avec une composition comprenant un agent lipophile tensio-actif et un plastifiant, caractérisé par le fait que l'agent lipophile tensio-actif est le mono-oléate, le monopalmitate, le monolaurate ou le monostéarate, de sorbitane, et que le plastifiant est le phtalate de diheptyle, de dioctyle ou de dinonyle.

2. Particules de résine transformables en mousse selon la revendication 1, dans lesquelles la composition comprend de 0,001 à 0,2 % en poids du plastifiant, rapporté au poids des particules.

3. Particules de résine transformables en mousse selon l'une des revendications 1 et 2, dans lesquelles la composition comprend de 0,01 à 0,2 % en poids de l'agent lipophile tensio-actif, rapporté au poids des particules.

4. Particules de résine transformables en mousse selon l'une quelconque des revendications précédentes, dans lesquelles le polymère vinylaromatique est le polystyrène.

5. Particules de résine transformables en mousse selon l'une quelconque des revendications précédentes, dans lesquelles le plastifiant est un phtalate de dioctyle.

6. Particules de résine transformables en mousse selon la revendication 5, dans lesquelles le plastifiant est le di(2-éthylhexyle) phtalate.

7. Particules de résine transformables en mousse selon l'une quelconque des revendications précédentes, dans lesquelles le mono-oléate, le monolaurate ou le monostéarate de sorbitane, est l'agent lipophile tensio-actif.

8. Particules de résine transformables en mousse selon la revendication 7, dans lesquelles l'agent lipophile tensio-actif est le mono-oléate de sorbitane.

9. Particules de résine transformables en mousse selon l'une quelconque des revendications précédentes, dans lesquelles la composition comprend le di(2-éthylhexyle) phtalate et le mono-oléate de sorbitane.

10. Particules de résine transformables en mousse selon l'une quelconque des revendications précédentes, qui comprennent de 3 à 10 % en poids du polymère, d'un agent porogène hydrocarbure volatil.

11. Particules de résine transformables en mousse selon la revendication 10, dans lesquelles l'agent porogène hydrocarbure volatil comprend le pentane.

12. Particules de résine transformables en mousse selon l'une quelconque des revendications précédentes, revêtues avec une composition comprenant le stéarate de zinc.

13. Procédé pour la préparation d'un produit cellulaire qui comprend la préparation d'une mousse préformée de particules cellulaires, obtenue par chauffage à la vapeur de particules de résine transformables, en mousse selon la revendication 1, et le traitement de la mousse préformée avec la vapeur dans un moule pour obtenir le produit cherché.

## Patentansprüche

1. Schäumbare Harzteilchen aus einem vinylaromatischen Polymer und einem flüchtigen Treibmittel, die mit einer Zusammensetzung aus einem lipophilen oberflächenaktiven Mittel und einem Weichmacher beschichtet sind, dadurch gekennzeichnet, daß das lipophile oberflächenaktive Mittel Sorbitanmonooleat, Sorbitanmonopalmitat, Sorbitanmonolaurat oder Sorbitanmonostearat und der Weichmacher Diheptylphthalat, Dioctylphthalat oder Dinonylphthalat sind.

2. Schäumbare Harzteilchen nach Anspruch 1, dadurch gekennzeichnet, daß die Zusammensetzung 0,001 bis 0,2 Gew.-% des Weichmachers, bezogen auf das Gewicht der Teilchen, enthält.

3. Schäumbare Harzteilchen nach den Ansprüchen 1 oder 2, dadurch gekennzeichnet, daß die Zusammensetzung 0,01 bis 0,2 Gew.-% des lipophilen oberflächenaktiven Mittels, bezogen auf das Gewicht der Teilchen enthält.

4. Schäumbare Harzteilchen nach einem der vorhergehenden Ansprüche, dadurch gekennzeichnet, daß das vinylaromatische Polymer Polystyrol ist.

5. Schäumbare Harzteilchen nach einem der vorhergehenden Ansprüche, dadurch gekennzeichnet, daß der Weichmacher ein Dioctylphthalat ist.

6. Schäumbare Harzteilchen nach Anspruch 5, dadurch gekennzeichnet, daß der Weichmacher Di-(2-äthylhexyl)-phthalat ist.

7. Schäumbare Harzteilchen nach einem der vorhergehenden Ansprüche, dadurch gekennzeichnet, daß das lipophile oberflächenaktive Mittel Sorbitanmonooleat, Sorbitanmonolaurat oder Sorbitanmonostearat ist.

8. Schäumbare Harzteilchen nach Anspruch 7, dadurch gekennzeichnet, daß das lipophile oberflächenaktive Mittel Sorbitanmonooleat ist.

9. Schäumbare Harzteilchen nach einem der vorhergehenden Ansprüche, dadurch gekennzeichnet, daß die Zusammensetzung Di-(2-äthylhexyl)-phthalat und Sorbitanmonooleat enthält.

10. Schäumbare Harzteilchen nach einem der vorhergehenden Ansprüche, dadurch gekennzeichnet, daß sie 3 bis 10 Gew.-%, bezogen auf das Polymer, eines flüchtigen Kohlenwasserstoff-Treibmittels enthalten.

11. Schäumbare Harzteilchen nach Anspruch 10, dadurch gekennzeichnet, daß sie als flüchtiges Kohlenwasserstoff-Treibmittel Pentan enthalten.

12. Schäumbare Harzteilchen nach einem der vorhergehenden Ansprüche, dadurch gekennzeichnet, daß sie mit einer Zinkstearat enthaltenden Zusammensetzung beschichtet sind.

13. Verfahren zur Herstellung eines geschäumten Produkts, dadurch gekennzeichnet, daß man durch Dampferhitzen der schäumbaren Harzteilchen nach Anspruch 1 einen Vorschaum aus geschäumten Teilchen bildet und zur Bildung des gewünschten Produkts den Vorschaum in einer Form mit Dampf behandelt.